## Europäisches Patentamt

## European Patent Office

## Office européen des brevets

(11) Veröffentlichungsnummer: **0 107 787**

**A2**

(12) # EUROPÄISCHE PATENTANMELDUNG

(21) Anmeldenummer: 83109503.9

(22) Anmeldetag: 23.09.83

(51) Int. Cl.³: **D 21 H 5/06**
**B 31 F 1/07**

(30) Priorität: 01.10.82 DE 3236459

(43) Veröffentlichungstag der Anmeldung:
09.05.84 Patentblatt 84/19

(84) Benannte Vertragsstaaten:
CH FR GB IT LI SE

(71) Anmelder: Windmöller & Hölscher
Münsterstrasse 48-52
D-4540 Lengerich i.W.(DE)

(72) Erfinder: Sarcander, Uwe, Ing. grad.
Auf der Rothenburg 31
D-4540 Lengerich(DE)

(74) Vertreter: Lorenz, Eduard et al,
Rechtsanwälte Lorenz, Eduard - Seidler, Bernhard
Seidler, Margrit - Gossel, Hans-K. Philipps, Ina, Dr.
Widenmayerstrasse 23
D-8000 München 22(DE)

(54) Verfahren und Vorrichtung zur Herstellung von mit Kunststoff beschichteten sanitären Papierbahnen.

(57) Zur Herstellung von mit Kunststoff beschichteten sanitären Papierbahnen mit einem tiefen rechteckigen oder rautenförmigen reliefartigen Prägemuster werden die sanitäre Papierbahn und eine Bahn aus im plastischen Zustand befindlichen Kunststoff zusammengebracht und fortlaufend unter Anwendung von Druck zwischen einem Prägewerkzeug und einer elastischen Abstützung mit dem Prägemuster geprägt und verbunden. Dabei wird von der Seite der Kunststoffbahn her gekühlt. Um in einfacher Weise eine vollflächige Verbindung der Papierbahn mit der Folienbahn zu erreichen, wird die Kunststoffbahn extrudiert und in von daher plastischem Zustand verwendet. Das Prägen wird von der Seite der Kunststoffschicht mit auf dieser Seite angeordnetem Prägewerkzeug vorgenommen, wobei das Relief des Prägewerkzeugs so ausgebildet wird und das Prägen so erfolgt, daß auch der Reliefgrund des Prägewerkzeugs den Kunststoff mit noch ausreichendem Druck gegen die auf der elastischen Abstützung abgestützte Papierbahn andrückt und die beiden Bahnen sich so im wesentlichen vollflächig miteinander verkleben.

- 7 -

Windmöller & Hölscber,
4540 Lengerich

---

Verfahren und Vorrichtung zur Herstellung von mit
Kunststoff beschichteten sanitären Papierbahnen

---

Die Erfindung betrifft ein Verfahren zur Herstellung von mit
Kunststoff beschichteten sanitären Papierbahnen mit einem
rechteckigen oder rautenförmigen Prägemuster sowie eine Vorrichtung zur Durchführung dieses Verfahrens.

Sanitäre Papiere, also Watte- oder vliesartige Papiere, die
weich, voluminös und saugfähig sind, werden in Krankenhäusern,
Arztpraxen oder auch in Haushalten mit Kleinkindern meist als
Einwegunterlagen verwendet, sie eignen sich aber auch als
Aufwischtücher oder dergleichen. Werden die sanitären Papiere
für Hygienezwecke verwendet, ist deren Naßfestigkeit von
besonderer Bedeutung. Um die Naßfestigkeit sogenannter Hygienepapiere zu erhöhen, ist es bekannt, vliesartige oder sanitäre
Papiere mit einer einseitig dichtenden Beschichtung zu versehen.
Zur Herstellung derartiger Hygienepapiere ist es bekannt, von
einer ersten Rolle eine dünne Kunststoffolienbahn und von einer
zweiten Rolle eine Papierwattebahn abzuziehen und beide Bahnen

0107787

zusammenzuführen. Die übereinanderliegenden Bahnen werden zu ihrer Verbindung miteinander nach Plastifizierung der Folienbahn durch Erwärmung durch ein Walzenpaar geleitet, von dem eine Walze als Gegendruckwalze und die andere als Prägewalze mit einem beispielsweise rautenförmigen Oberflächenrelief ausgebildet ist. Bei nach diesem Verfahren hergestellten Hygienepapieren ist die als Trägerbahn dienende Papierwattebahn durch die auf der Oberfläche der Prägewalze vorhandenen reliefartigen Erhöhungen mit der Folienbahn nur gitterartig entsprechend dem Muster des Reliefs und nicht vollflächig verbunden. Die reliefartige Struktur bildet sich sowohl auf der Folie als auch auf der Papierwattebahn aus und verleiht dem Hygienepapier zusätzlich eine griffige Oberfläche. Sobald ein nach diesem bekannten Verfahren hergestelltes Hygienepapier feucht geworden ist, löst sich bei nur geringer Reibung die Papierwattebahn von der Folienbahn ab, weil beide Bahnen miteinander nur längs der Linien des gitterartigen Reliefs verbunden sind.

Abgesehen von der nur unvollständigen Verbindung der beiden Bahnen des nach dem bekannten Verfahren hergestellten Hygienepapiers ist dieses Verfahren verhältnismäßig aufwendig und umständlich, weil die Kunststoffolie zunächst einmal in einem getrennten Arbeitsgang hergestellt und aufgerollt werden muß und anschließend zum Zwecke der Verbindung mit der Papierwattebahn wieder abgerollt und erwärmt werden muß. Ein weiterer Nachteil des bekannten Verfahrens ergibt sich aus dem erforderlichen hohen Prägedruck des Prägewerkzeugs, so daß die Prägewalze und die Gegendruckwalze hohen Beanspruchungen ausgesetzt sind.

Aufgabe der Erfindung ist es, ein Verfahren vorzuschlagen, nach dem sich in einfacher Weise mit einem reliefartigen Muster versehene Hygienepapiere herstellen lassen, deren Papierwattebahn vollflächig mit der diese einseitig beschichtenden Folienbahn
verbunden ist.

Erfindungsgemäß wird diese Aufgabe dadurch gelöst, daß auf eine
Seite einer sanitären Papierbahn eine Kunststoffschicht aufextrudiert und mit einem gekühlten Prägewerkzeug gegen die
elastisch abgestützte sanitäre Papierbahn zur Verbindung mit
dieser angedrückt wird. Nach dem erfindungsgemäßen Verfahren
wird der gerade extrudierte Kunststoffilm in noch weichplastischem Zustand unmittelbar durch das gekühlte Prägewerkzeug von
der Seite der aufextrudierten Kunststoffschicht her gegen die
Papierwattebahn angedrückt, so daß mit einem relativ geringen
Andruck trotz der reliefartigen Oberfläche des Prägewerkzeugs
eine vollflächige Verklebung beider Bahnen erreicht wird.

Aus der DE-OS 17 61 403 ist ein Verfahren und eine Vorrichtung
zur Herstellung von Verpackungspapier bekannt, das aus einer
Trägerbahn aus Papier besteht, die rasterartig mit einer diese
kaschierenden Folienbahn verbunden ist. Die Vorrichtung zur
Herstellung dieser mit einer Kunststoffolie kaschierten Verpackungspapiere besteht aus einer Prägewalze und einer Gegendruckwalze, zwischen denen die zu beschichtende Papierbahn
S-förmig hindurchläuft, wobei eine Breitschlitzdüse vorgesehen
ist, aus der ein Kunststoffilm in den durch die Präge- und
Gegendruckwalze gebildeten Walzenspalt extrudiert wird. Bei
der bekannten Vorrichtung ist die Gegendruckwalze mit einem
wassergekühlten, glatten, hartverchromten Mantel versehen,
während die Prägewalze einen Gummimantel mit dem gitterförmigen
Prägemuster aufweist. Bei der bekannten Vorrichtung läuft die
Packpapierbahn zunächst auf die mit einem Gummimantel versehene
Prägewalze auf, so daß der schmelzflüssige Kunststoffilm in
den Walzenspalt zwischen die Papierbahn und die hartverchromte
Gegendruckwalze extrudiert wird und der Prägedruck durch die Gummiwalze auf die Papierbahn ausgeübt wird. Da sich unter dem Prägedruck das aus Gummileisten bestehende gitterförmige Relief der Prägewalze abflacht und der Prägedruck auf die relativ steife Packpapierbahn ausgeübt wird, vermag sich kein ausgeprägtes rasterartiges Verbindungsmuster auszubilden und die Verbindung der Verpackungspapierbahn mit der Folienbahn erfolgt nur im Bereich der reliefartigen Erhöhungen der Gummiwalze und nicht vollflächig.

Ausgehend von der aus der DE-OS 17 61 403 bekannten Vorrichtung zeichnet sich die erfindungsgemäße Vorrichtung dadurch aus, daß die Gegendruckwalze mit einem glatten zylindrischen Mantel aus elastischem Material und der aus Stahl oder dergleichen bestehende Mantel der Prägewalze gekühlt ist, daß Einrichtungen zur etwa waagerechten Zuführung der sanitären Papierbahn zur Gegendruckwalze vorgesehen sind und daß der Mantel der Prägewalze mit zwei Gruppen jeweils zueinander paralleler und sich schneidender streifenförmiger Erhebungen versehen ist, deren Höhe der Dicke der zu beschichtenden sanitären Papierbahn zuzüglich der Dicke des extrudierten Kunststoffilms entspricht. Mit der erfindungsgemäßen Vorrichtung läßt sich unter Erzeugung eines gut ausgeprägten rasterartigen Musters eine vollflächige Verbindung des extrudierten Kunststoffilms mit der Papierwattebahn erreichen, weil die Höhe der das Relief bildenden Erhebungen der Prägewalze derart auf die Dicke der miteinander zu verbindenden Bahnen abgestimmt ist, daß ein zur Verklebung ausreichender Andruck auch in den Vertiefungen des prägenden Reliefmusters gewährleistet ist.

Ein Ausführungsbeispiel der Erfindung wird nachstehend anhand der Zeichnung näher erläutert. In dieser zeigt

Fig. 1        eine Beschichtungsvorrichtung in Seitenansicht
              in schematischer Darstellung und

Fig. 2        eine Vorderansicht der gekühlten Prägewalze.

Eine von einer nicht dargestellten Vorratsrolle abgewickelte
Papierwattebahn 1 wird über nicht dargestellte Zuführungseinrichtungen der Gegendruckwalze 2 zugeführt, die mit einem
glatten Gummimantel 2´ versehen ist. Die Gegendruckwalze 2 ist
im Maschinengestell 7 an den einen Enden zweiarmiger Hebel 8
gelagert, an deren anderen Enden die Kolbenstange 9 einer im
Maschinengestell gelagerten Druckmittel-Kolben-Zylindereinheit
10 angelenkt ist. Durch die Druckmittel-Kolben-Zylindereinheit
10 ist die Andrückwalze 2 gegen die im Maschinengestell 7 gelagerte und mit einem gekühlten Mantel versehene Prägewalze 3
andrückbar. Oberhalb des von den Gegendruck- und Prägewalzen
2, 3 gebildeten Walzenspalts 6 ist eine Breitschlitzextruderdüse
4 angeordnet, aus der ein dünner schmelzflüssiger Polyäthylenfilm in den Walzenspalt 6 extrudiert werden kann.

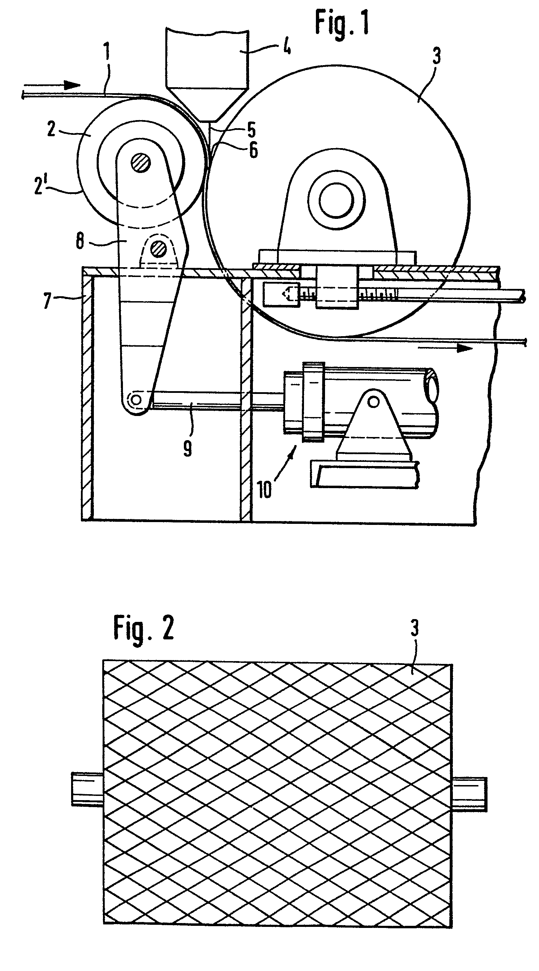

Die Prägewalze 3 ist, wie aus Fig. 2 ersichtlich, mit einem
rautenartigen Prägemuster versehen, das sich reliefartig über
dem Walzenmantel erhebt.

Die Papierwattebahn 1 umschlingt die Gegendruck- und Prägewalzen
2, 3 in der dargestellten Form etwa S-förmig.

Zur Herstellung von Hygienepapieren wird aus der Breitschlitzextruderdüse 4 auf die Papierwattebahn 1 in dem Walzenspalt
6 ein noch schmelzflüssiger Kunststoffilm aufextrudiert, der
unmittelbar durch die Prägewalze 3 gekühlt und unter Erzeugung
eines ausgeprägten reliefartigen Musters gegen die Papierwattebahn 1 angedrückt wird. Die Höhe des reliefartigen Prägemusters

Seite 6

der Kühlwalze 3 entspricht in etwa der Dicke der Papierwatte
1 zuzüglich der Stärke des extrudierten Kunststoffilms 5, so
daß der den Reliefgrund bildende Walzenmantel der Kühlwalze
3 den Kunststoffilm 5 noch mit ausreichendem Druck gegen die
auf der Gegendruckwalze 2 abgestützte Papierwattebahn andrückt,
so daß beide Bahnen vollflächig miteinander verkleben.

0107787

Windmöller & Hölscher,
4540 Lengerich

---

Verfahren und Vorrichtung zur Herstellung von mit
Kunststoff beschichteten sanitären Papierbahnen

---

Patentansprüche:

1. Verfahren zur Herstellung von mit Kunststoff beschichteten
   sanitären Papierbahnen mit einem rechteckigen oder rautenförmigen Prägemuster, dadurch gekennzeichnet, daß auf
   einer Seite einer sanitären Papierbahn eine Kunststoffschicht aufextrudiert und mit einem gekühlten Prägewerkzeug
   gegen die elastisch abgestützte sanitäre Papierbahn zur
   Verbindung mit dieser angedrückt wird.

2. Vorrichtung zur Durchführung des Verfahrens nach Anspruch
   1 mit einer Prägewalze und einer Gegendruckwalze, zwischen
   denen die zu beschichtende Papierbahn S-förmig hindurchläuft, und mit einer einen Kunststoffilm in den durch die
   Präge- und Gegendruckwalzen gebildeten Walzenspalt extrudierenden Breitschlitzdüse, dadurch gekennzeichnet, daß die Gegendruckwalze (2) mit einem glatten zylindrischen Mantel (2´) aus elastischem Material und der aus Stahl oder dergleichen bestehende Mantel der Prägewalze (3) gekühlt ist, daß Einrichtungen zur etwa waagerechten Zuführung der sanitären Papierbahn (1) zur Gegendruckwalze (2) vorgesehen sind und daß der Mantel der Prägewalze (3) mit zwei Gruppen jeweils zueinander paralleler und sich schneidender streifenförmiger Erhebungen versehen ist, deren Höhe der Dicke der zu beschichtenden sanitären Papierbahn (1) zuzüglich der Dicke des extrudierten Kunststoffilms (5) entspricht.

Fig.1

Fig. 2